# EUROPEAN PATENT SPECIFICATION

(11) **EP 3 385 776 B1**
(45) Date of publication and mention of the grant of the patent: **29.09.2021**
(21) Application number: 16870367.6
(22) Date of filing: 02.11.2016
(51) Int. Cl.: G02B 27/01, B60K 35/00, G09G 3/20

(54) **HEAD-UP DISPLAY**
HEAD-UP-ANZEIGE
AFFICHEUR TÊTE HAUTE

(30) Priority: 01.12.2015 JP 2015234395
(43) Date of publication of application: 10.10.2018
(73) Proprietor: Nippon Seiki Co., Ltd., Nagaoka-shi, Niigata 940-8580 (JP)
(72) Inventor: MOROHASHI,Kazuo, Niigata (JP); TAKAHASHI, Yuichi, Niigata (JP); MATSUURA, Kazuya, Niigata (JP); SATO, Megumi, Niigata (JP)
(74) Representative: Carpmaels & Ransford LLP
(86) International application number: PCT/JP2016/082561
(87) International publication number: WO 2017/094427

(56) References cited:
- WO-A1-2012/176288
- DE-T5-112015 006 458
- JP-A- 2003 200 755
- JP-A- 2006 162 442
- JP-A- 2008 257 021
- JP-A- 2015 011 666
- US-A1- 2014 368 540

## Description

### TECHNICAL FIELD

The present invention relates to a head-up display capable of generating a virtual image display surface inclined in a depth direction of a line of sight.

### BACKGROUND ART

A head-up display is for displaying a virtual image on a virtual image display surface. The head-up display disclosed in Patent Document 1 generates a virtual image display surface inclined with respect to a vertical direction. Specifically, a virtual image display surface is generated to be inclined with respect to the vertical direction so that an upper end is farther from a viewer than a lower end. This enables a viewer to visually recognize a virtual image in a short distance or a farther distance in accordance with a position at which a virtual image is displayed on a virtual image display surface.

### CITATION LIST

### PATENT LITERATURE

Patent Document 1: Japanese Unexamined Patent Application Publication No. 2008-257021
JP 2006 162442 A describes a navigation system for displaying guidance information. The navigation system includes a display position determination part which determines a display position of guidance information as not to be superposed on detected obstructions.
US 2014/368540 A describes an in-vehicle display apparatus in a vehicle which includes a region recognition circuit and an image output circuit.

### SUMMARY OF THE INVENTION

### PROBLEMS TO BE SOLVED BY THE INVENTION

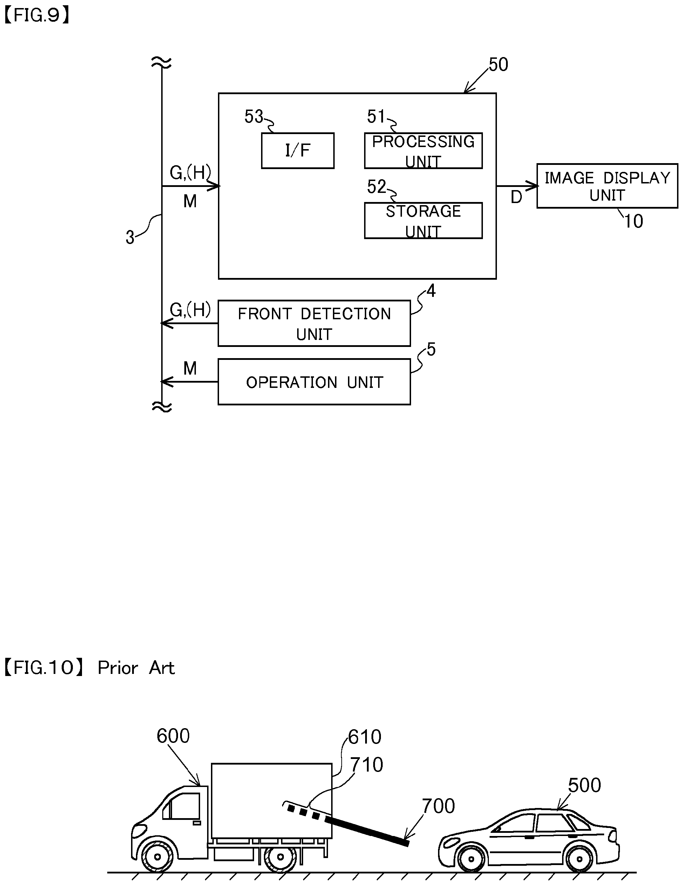

However, for example, as shown in FIG. 10, when a distance between an own vehicle 500 and a preceding vehicle 600 traveling in front of the own vehicle 500 is shortened, a distant area 710 of a virtual image display surface 700 generated by a head-up display located far away from a viewer becomes farther from the viewer than a closest part 610 of the preceding vehicle 600 located nearest to the own vehicle 500.

In such a case, the viewer will visually recognize a virtual image displayed in the distant area 710 of the virtual image display surface 700 in the depth of the closest part 610 of the preceding vehicle 600, and may feel it strange. That is, a related-art head-up display may deteriorate visibility of a virtual image and a preceding vehicle (real view).

An object of the present invention is to ensure visibility of a real view and a virtual image in a head-up display capable of displaying a virtual image on a virtual image display surface inclined in a depth direction of a line of sight.

### SOLUTION TO PROBLEM

The present invention adopts the following means in order to solve the above problem.

A head-up display according to the present invention is configured to generate a first virtual image display surface capable of displaying a first virtual image in a plane inclined in a depth direction of a line of sight. The head-up display includes an interface for acquiring a distance between an own vehicle and an obstacle located in front of the own vehicle, and a display control unit which is configured to move the first virtual image displayed in a distant area of the first virtual image display surface that is farther than the distance acquired by the interface to an area of the first virtual image display surface that is closer than the distant area. The purpose is to ensure the visibility of both the preceding vehicle in a real view and the virtual image.

### EFFECT OF THE INVENTION

In a head-up display capable of displaying a virtual image on a virtual image display surface inclined in a depth direction of a line of sight, it is possible to ensure visibility of a real view and a virtual image.

### BRIEF DESCRIPTION OF THE DRAWINGS

FIG. 1 is a diagram showing a first virtual image display surface and a second virtual image display surface generated by a head-up display according to an embodiment of the present invention.
FIG. 2 is a diagram for explaining an arrangement of the first virtual image display surface and the second virtual image display surface generated by the head-up display of the embodiment when a viewer visually recognizes the front.
FIG. 3 is a schematic diagram showing an example of a configuration of the head-up display of the embodiment.
FIG. 4 is a diagram showing an electrical configuration of the head-up display of the embodiment.
FIG. 5 is a flowchart for explaining an operation of the head-up display of the embodiment.
FIG. 6 shows a positional relationship and a display example; the left-hand illustration shows a positional relationship between an own vehicle and a preceding vehicle, and the rightmost diagram shows a display example of a virtual image on a first virtual image display surface and a second virtual image display surface in the positional relationship between the own vehicle and the preceding vehicle shown in the left-hand illustration.
FIG. 7 is a view showing a first virtual image display surface generated by a head-up display according to a modification of the present invention.
FIG. 8 is a view showing a virtual image on a first virtual image display surface generated by a head-up display of a modification of the present invention.
FIG. 9 is a diagram showing an electrical configuration of a head-up display of a modification of the present invention.
FIG. 10 is a view for explaining problems in a related-art head-up display, showing a positional relationship between an own vehicle and a preceding vehicle and a virtual image display surface generated by the related-art head-up display.

### MODE FOR CARRYING OUT THE INVENTION

Embodiments described below are used to facilitate understanding of the present invention.

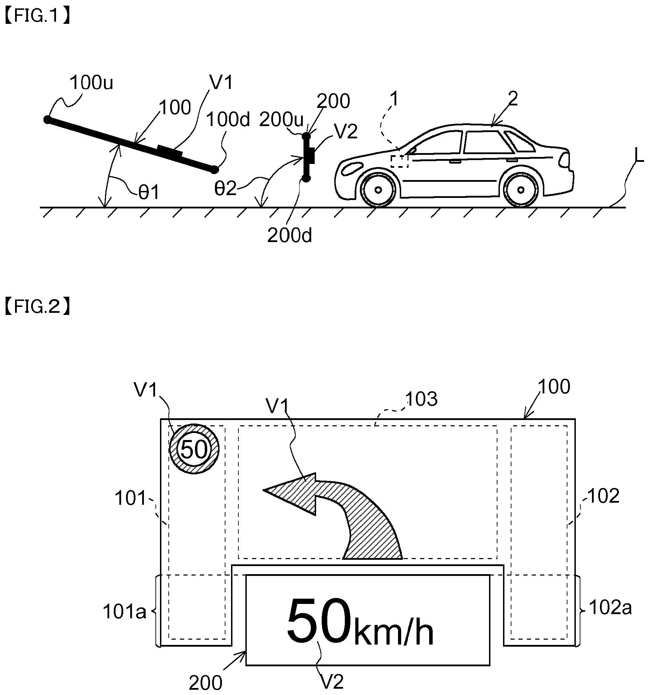

A HUD 1 of the present invention, as shown in FIG. 1, is mounted on an own vehicle 2, and generates a first virtual image display surface 100 capable of displaying a first virtual image V1 on a plane thereof, and a second virtual image display surface 200, which is located closer to a viewer (for example, a driver of the own vehicle 2) than the first virtual image display surface 100 and capable of displaying a second virtual image V2 on a plane thereof. The first virtual image display surface 100 and the second virtual image display surface 200 are merely indicative of the areas capable of displaying the first virtual image Vl and the second virtual image V2, and are not visible as an image by a viewer.

The first virtual image display surface 100 is a surface that is inclined in the depth direction as viewed from the viewer (typically, in front of the own vehicle 2).

The first virtual image display surface 100 of the present embodiment includes, for example, as shown in FIG. 2, a left display area 101 located on the left side of the left end of the second virtual image display surface 200, a right display area 102 located on the right side of the right end of the second virtual image display surface 200, and a connecting display area 103 located above the second virtual image display surface 200 and connecting the left display area 101 and the left display area 101. The first virtual image display surface 100 of the present embodiment is formed substantially in a gate shape. The left display area 101 and the right display area 102 on the first virtual image display surface 100 includes a left extended display area 101a and a right extended display area 102a extending downward from the upper end of the second virtual image display surface 200. In addition, as shown in FIG. 1, the first virtual image display surface 100 of the present embodiment is inclined so that an upper end 100u is farther from the viewer than a lower end 100d.

The second virtual image display surface 200 is a surface raised to the viewer from the first virtual image display surface 100.

The second virtual image display surface 200 of the present embodiment is, for example, a virtual surface of which lower end 200d and upper end 200u are located at substantially the same distance from to the viewer. In other words, as shown in FIG. 1, for the own vehicle 2 on a road surface with no gradient (lane L), an angle θ1 between a surface of the first virtual image display surface 100 opposite to the viewer side and the lane L (for example, a horizontal direction) is set to be smaller than an angle θ2 between a surface of the second virtual image display surface 200 opposite to the viewer side and the lane L (for example, a horizontal direction). The angle θ1 is 0 to 45 degrees, and specifically set to 20 degrees, for example. The angle θ2 is 80 to 90 degrees, and specifically set to 83 degrees, for example. The fact that the distance from the viewer is substantially the same means that tolerance of distance relative to the viewer is within 0.1 meters.

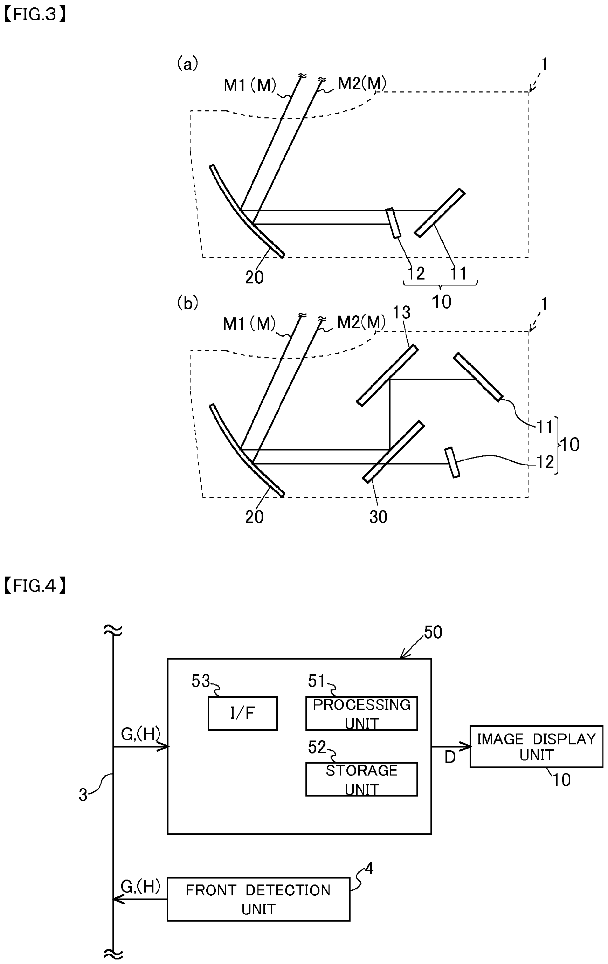

With reference to FIG. 3, which is a schematic diagram of a head-up display (hereinafter referred to as HUD) 1 according to the embodiment, a configuration of the HUD of this embodiment will be described.

As shown in FIG. 3 (a), the HUD 1 according to the embodiment mainly includes an image display unit 10 for displaying an image, a projection unit 20 for projecting display light M from the image display unit 10 toward the outside of the HUD 1, and a display control unit 50 to be described later.

The image display unit 10 has a first display surface 11 for displaying a first image (not shown) and a second display surface 12 for displaying a second image (not shown). The first display surface 11 corresponds to the first virtual image display surface 100. The first image displayed on the first display surface 11 is visually recognized as a first virtual image Vl on the first virtual image display surface 100. The second display surface 12 corresponds to the second virtual image display surface 200. The second image displayed on the second display surface 12 is visually recognized as a second virtual image V2 on the second virtual image display surface 200. Primarily, innumerable display light based on images is emitted from the first display surface 11 and the second display surface 12. In the drawings used for the explanation of the present embodiment, only an optical axis of light flux of the display light directed from the first display surface 11 toward a viewer is shown as a first display light Ml, and only an optical axis of light flux of the display light directed from the second display surface 12 toward a viewer is shown as a second display light M2.

The image display unit 10 is constituted by, for example, a projection type display device using a reflective display device such as a DMD or LCoS. In this case, the first display surface 11 and the second display surface 12 are constituted by a screen or the like for displaying projection light emitted from the projection type display device as a real image. The image display unit 10 may be constituted by a plurality of projection type display devices for displaying the first image on the first display surface 11 and a projection type display device for displaying the second image on the second display surface 12, or may be configured to image a part of projection light from a single projection type display device on the first display surface 11 and image another part of projection light on the second display surface 12.

The first display surface 11 is arranged at a position farther from the projection unit 20 than the second display surface 12 so that the optical path length of the first display light Ml directed from the first display surface 11 toward a viewer is longer than the optical path length of the second display light M2 directed from the second display surface 12 toward the viewer. As a result, the first virtual image display surface 100 corresponding to the first display surface 11 is generated at a position farther from the viewer than the second virtual image display surface 200 corresponding to the second display surface 12. Incidentally, by folding back the first display light Ml with a reflector (not shown) or the like, the optical path length of the first display light Ml directed from the first display surface 11 toward the viewer may be prolonged.

In addition, the first display surface 11 and the second display surface 12 are disposed with different installation angles in the HUD 1. As a result, the first virtual image display surface 100 and the second virtual image display surface 200 are generated with a different angle.

In addition to the above embodiment, the HUD 1 for generating the first virtual image display surface 100 and the second virtual image display surface 200, as shown in FIG. 3 (b), may be configured to have an image synthesizing unit 30 in addition to the first display surface 11, the second display surface 12, and the projection unit 20. The image synthesizing unit 30 shown in FIG. 3 (b) comprises a transmissive reflector such as a half mirror or a Dichroic mirror, and transmits the first display light M1 from the first display surface 11, and reflects the second display light M2 from the second display surface 12 to thereby direct the first display light M1 and the second display light M2 toward the viewer side. As a result, the HUD 1 in FIG. 3 (b) can generate the first virtual image display surface 100 and the second virtual image display surface 200 as described above.

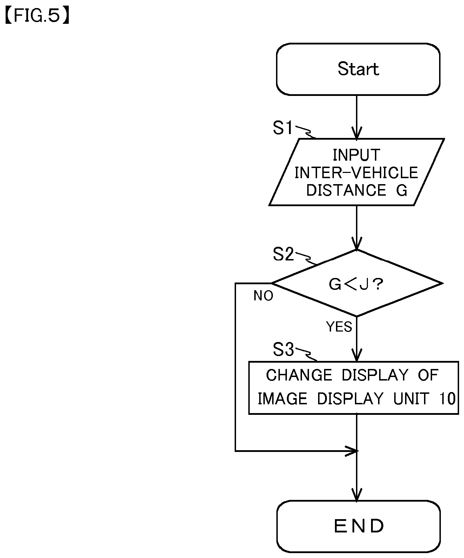

In the HUD 1 of the present invention, the display control unit 50 described later obtains an inter-vehicle distance G between the own vehicle 2 and the preceding vehicle W (obstacle) traveling in front of the own vehicle 2, and moves the first virtual image V1 displayed in the display-limited area 110, which is an area of the first virtual image display surface 100 farther than the obtained inter-vehicle distance G, to an area other than the display-limited area 110. A control system of the HUD 1 will be described below with reference to FIGS. 4 and 5. FIG. 4 is a block diagram showing an electrical configuration of the HUD 1. FIG. 5 is a flowchart showing an operation operation of the HUD 1.

A front detection unit 4, for example, includes a camera such as a stereo camera, a monocular camera, a monocular three-dimensional stereo camera and the like, which is provided in the own vehicle 2 to capture visible light, or an infrared sensor, a millimeter wave radar, a laser radar and the like. The front detection unit functions as an inter-vehicle distance detection unit for detecting the inter-vehicle distance G, which is a distance between the own vehicle 2 (viewer) and the closest part Wa of the preceding vehicle W traveling in front of the own vehicle 2 located nearest to the own vehicle 2. The front detection unit transmits the inter-vehicle distance G to the display control unit 50 of the HUD 1 via a communication bus 3 such as a CAN provided in the own vehicle 2.

The display control unit 50 includes, for example, a processing unit 51, a storage unit 52, and an interface 53. The processing unit 51 is constituted by a CPU, for example. The storage unit 52 is constituted by a ROM, for example. The interface 53 is constituted by an input / output communication interface connected to the communication bus 3. For example, the interface 53 acquires vehicle information, the inter-vehicle distance G and the like of the viewer via the communication bus 3. The storage unit 52 stores data for generating image data D based on the input vehicle information and the like, and data for adjusting the display of the first image based on the input inter-vehicle distance G. Specifically, the storage unit 52 previously stores display distance data associating distances based on the viewer (own vehicle 2) for each pixel of the first image displayed on the first display surface 11. The processing unit 51 reads the display distance data from the storage unit 52, and adjusts the position of the first image on the first display surface 11 to thereby display a first virtual image V1 at a position on the display surface 100 separated from the viewer by a desired distance. The interface 53 can acquire the inter-vehicle distance G between the own vehicle 2 and the preceding vehicle W traveling in front of the own vehicle 2 from the front detection unit 4 via the communication path 3, and also has a function as an inter-vehicle distance information acquisition means described in claims of the present invention, for example. The display control unit 50 may be provided inside the HUD 100 or some or all of its functions may be provided on the vehicle side outside the HUD 100.

FIG. 5 is a flowchart showing an example of the operation of the HUD 100 according to the present embodiment. The HUD 100 starts processing to be described below, for example, when the vehicle 1 is activated, when electric power is supplied to an electronic equipment of the vehicle 1, or when a predetermined time has elapsed after power supply of the vehicle 1 or the electronic equipment of the vehicle 1.

First, in step S1, the display control unit 50 inputs the inter-vehicle distance G via the interface 53.

Next, in step S2, the display control unit 50 determines whether the inter-vehicle distance G is less than a distance J from the viewer to the end lOOp of the first virtual image display surface 100 (inter-vehicle distance G < farthest display distance J). For example, the display control unit 50 compares the farthest display distance J, which is the distance from the viewer (own vehicle 2) to the end lOOp (the upper end 100u in the present embodiment) of the first virtual image display surface 100 and the inter-vehicle distance G from the viewer (own vehicle 2) to the preceding vehicle W. When the inter-vehicle distance G is shorter than the farthest display distance J of the first virtual image display surface 100 (YES in step S2), the control unit shifts to step S3. When the inter-vehicle distance G is longer than the farthest display distance J of the first virtual image display surface 100 (NO in step S2), the display control unit 50 terminates the process. Even when the flow chart shown in FIG. 5 is completed, the display control unit repeats the process from step S1 continuously or intermittently until the power to the HUD 1 is cut off.

In step S3, the display control unit 50 moves the first virtual image V1 displayed in the display-limited area 110 of the first virtual image display surface 100, which is an area separated farther from the viewer than the closest part Wa of the preceding vehicle W, to an area of the first virtual image display surface 100 other than the display-limited area 110. Specifically, the display control unit 50 reads the display distance data stored in the storage unit 52 in advance and associating distances from the viewer for each pixel of the first display surface 11, and moves the first image, which is displayed in a pixel area of the first display surface 11 corresponding to the display-limited area 110 on the first virtual image display surface 100 separated farther than the vehicle distance G input in step S1, to out f of this area.

In step S3, the display control unit 50 may display information indicated by the first virtual image V1 displayed in the display-limited area 110 on the second virtual image display surface 200 instead of the first virtual image display surface 100. Specifically, the display control unit 50 may hide the first image on the first display surface 11 corresponding to the first virtual image V1 displayed in the display-limited area 110, and display the second display image relating to the information indicated by the first virtual image V1 displayed on the display-limited area 110 on the second display surface 12.

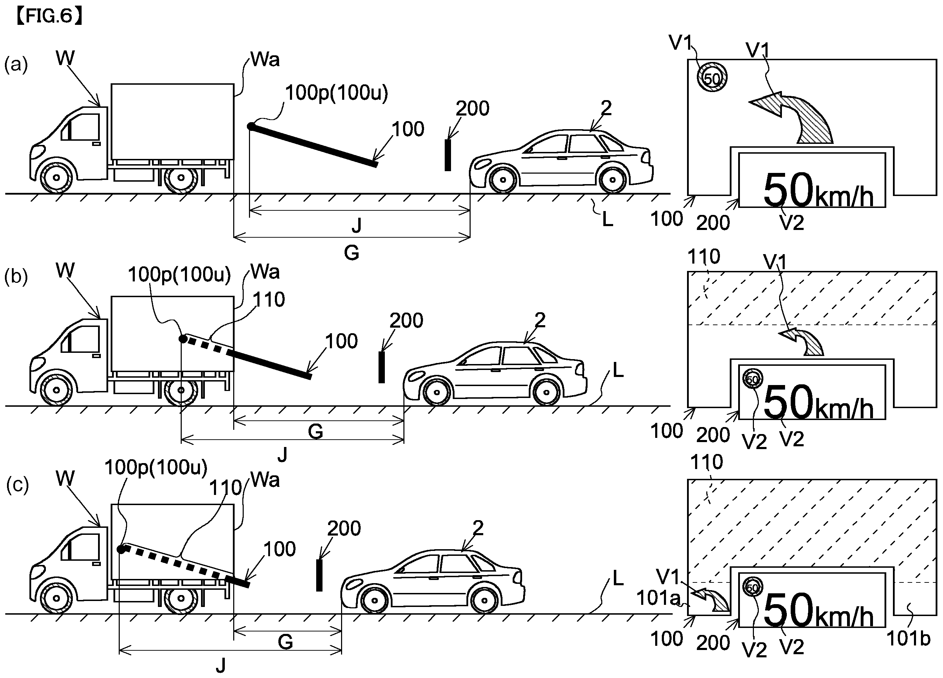

Hereinafter, with reference to FIG. 6, an explanation will be given on transition of displays of the first virtual image V1 on the first virtual image display surface 100 and the second virtual image V 2 on the second virtual image display surface 200 based on the positional relationship between the own vehicle 2 and the preceding vehicle W.

As shown in FIG. 6 (a), when the inter-vehicle distance C is equal to or longer than the farthest display distance J to the end lOOp of the first virtual image display surface 100 farthest from the viewer (inter-vehicle distance G ≧ farthest display distance J), the display control unit 50 performs normal display.

As shown in FIG. 6 (b), when the inter-vehicle distance G is shorter than the distance J to the end lOOp of the first virtual image display surface 100 farthest from the viewer (inter-vehicle distance G < farthest display distance J), the display control unit 50 reads the display distance data, and moves the first image displayed in an area including the pixels of the first display surface 11 corresponding to the distance farther than the inter-vehicle distance G, to the other area of the display surface 11 or the second display surface 12. As a result, the display control unit 50 moves the first virtual image V1 displayed in the display-limited area 110 to an area other than the display-limited area 110 within the first virtual image display surface 100 or the second virtual image display surface 200.

As shown in FIG. 6 (c), when the inter-vehicle distance G is shorter than the distance shown in FIG. 6 (b) (inter-vehicle distance G < farthest display distance J), the display control unit 50 increases the display-limited area 110 on the first virtual image display surface 100 based on the display distance data stored in the storage unit 52. As described above, the first virtual image display surface 100 of the present embodiment may move and display the first virtual image V1 to the left extended display area or / and the right extended display area 102a of the first virtual image display surface 100.

In the present embodiment, the distance between the viewer and the end lOOp (the upper end 100u in the present embodiment) of the first virtual image display surface 100 farthest from the viewer in the own vehicle 2 is about 5 meters. The distance between the viewer and the end 100 q (the lower end 100d in the present embodiment) of the first virtual image display surface 100 closet to the viewer (own vehicle 2) is about 3 meters. The distance between the viewer and the second virtual image display surface 200 is about 2.5 meters.

In other words, the second virtual image display surface 200 of the present embodiment is disposed on the viewer side 2 meters away from the end lOOp of the first virtual image display surface 100 farthest from the viewer. As described above, since the second virtual image display surface 200 is separated by 2 meters or more from the end lOOp of the first virtual image display surface 100 farthest from the viewer, when the information indicated by the first virtual image V1 displayed on the first virtual image display surface 100 is moved onto the second virtual image display surface 200, the viewer can clearly recognize that the information indicated by the first virtual image V1 is displayed close to the viewer side.

In addition, the second virtual image display surface 200 of the present embodiment is disposed on the viewer side at a distance of 0.5 meters from the end 100q of the first virtual image display surface 100 closest to the viewer. Since the second virtual image display surface 200 is separated by 0.5 meters or more away from the end 100q of the first virtual image display surface 100 closest to the viewer, the viewer can recognize a three-dimensional arrangement of the first virtual image V1 displayed on the first virtual image display surface 100 and the second virtual image V2 displayed on the second virtual image display surface 200. Therefore, when the information indicated by the first virtual image V1 displayed on the first virtual image display surface 100 is moved onto the second virtual image display surface 200, the viewer can recognize that the information indicated by the first virtual image V1 is displayed close to the viewer side.

### (Modification)

Modifications of the embodiment of the present invention will be described below.

In the above embodiment, the display-limited area 110 incapable of displaying the first virtual image V1 on the first virtual image display surface 100 is increased or decreased based on the inter-vehicle distance G between the own vehicle 2 and the preceding vehicle W. However, the display control unit 50 may increase and decrease the display-limited area incapable of displaying the first virtual image V1 on the first virtual display surface 100 depending on the distance to the preceding vehicle W described above or an obstacle including a building, a wall, and the like located in front of the own vehicle 2.

In this case, the display control unit 50 inputs, via the interface (obstacle distance information acquisition means), an obstacle distance that is a distance between the own vehicle 2 (viewer) and an obstacle located in front of the own vehicle 2.

Next, the display control unit 50 determines whether the obstacle distance is less than the distance J to the end lOOp of the first virtual image display surface 100 farthest from the viewer.

Then, the display control unit 50 moves the first virtual image V1 displayed in the display-limited area 110, which is an area farther from the viewer than the closest part of the obstacle on the first virtual image display surface 100, to an area of the first virtual image display surface 100 other than the display-limited area 110.

As for a configuration of the HUD 1, which generates the first virtual image display surface 100 capable of displaying the first virtual image V1 on a plane and the second virtual image display surface 200 located closer to the viewer than the first virtual image display surface 100 and capable of displaying the second virtual image V2 on a plane inclined more in a horizontal direction than the first virtual image display surface 100, it is not limited to the configurations shown in FIGS. 3 (a) and 3 (b), and may use a configuration of a known HUD capable of generating a plurality of virtual image display surfaces.

Further, the first virtual image display surface 100 in the above embodiment is a virtual surface with the upper end 100u separated farther from the viewer than the lower end 100d of the first virtual image display surface 100. However, the first virtual image display surface 100 in the present invention may be a virtual surface in which the lower end 100d is located farther from the viewer than the upper end 100u of the first virtual image display surface 100. In other words, the first virtual image display surface 100 may be a virtual image surface inclined in the depth direction of the line of sight of the viewer.

In addition, although the first display surface 11 and the second display surface 12 in the above embodiment are constituted by a display device using a reflective display device, they may be constituted by a laser scanning type display device generating an image by scanning a laser beam, a transmission type display device using a liquid crystal display element, a self-emissive display device using an organic EL element, or the like.

Although the first virtual image display surface 100 and the second virtual image display surface 200 in the above embodiment are flat surfaces, they may be curved surfaces. A virtual image display surface may be generated three or more.

Further, the distance between the viewer and the virtual image display surface (first virtual image display surface 100, second virtual image display surface 200) may be adjusted by providing a reflective optical system such as a concave mirror or a refractive optical system such as a convex lens on an optical path of the first display light M 1 and the second display light M 2 emitted from the first display surface 11 and the second display surface 12 of the HUD 1.

Still further, in the above embodiment, the entire first virtual image display surface 100 is provided at a position farther from the viewer than the second virtual image display surface 200, but a part of the first virtual image display surface 100 may be provided at a position farther from the viewer than the second virtual image display surface 200, and the other area may extend to a position on the viewer side than the third virtual image display surface 300.

Further, in the above embodiment, in the process shown in step S3 of FIG. 5, the display control unit 50 moves the first virtual image V1 displayed in the display-limited area 110 on the first virtual image display surface 100 to an area other than the display-limited area 110, but the visibility of the first virtual image V1 displayed on the display-limited area 110 may be lowered. Specifically, the display control unit 50 reduces the luminance of the first image on the first display surface 11 corresponding to the first virtual image V1 displayed on the display-limited area 110 on the first virtual image display surface 100, or reduces the brightness or saturation of the first image, thereby lowering the visibility of the first virtual image V1. With such a configuration, it is possible to reduce the strange feeling that the first virtual image V1 is viewed farther than the closest part Wa of the preceding vehicle (obstacle) W, facilitating visual recognition of indications outside the front vehicle W (a lamp or notes on the back of the preceding vehicle (obstacle) W).

In the above embodiment, the distances based on the viewer (own vehicle 2) are successively associated for each pixel of the first display surface 11 in the data stored in the storage unit 52. However, the distances based on the viewer (own vehicle 2) may be associated stepwise for each of a plurality of adjacent pixels on the display surface 11.

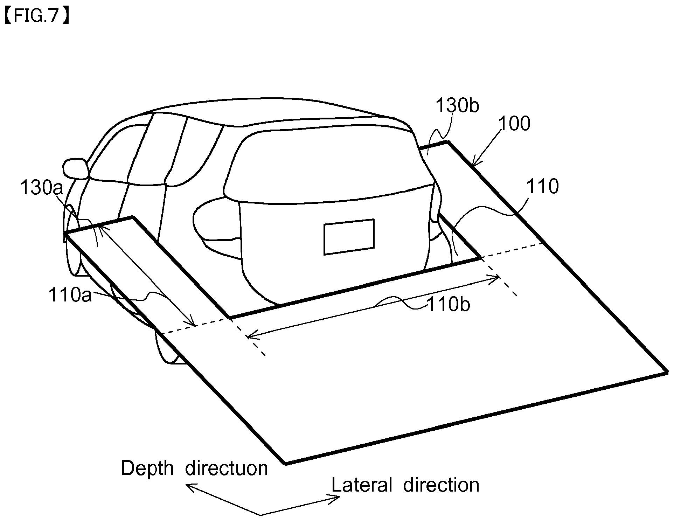

Further, as shown in FIG. 4, the HUD 1 in the modification is capable of obtaining end information H related to the left and right ends of the preceding vehicle W from the front detection unit 4 via the interface (end information acquisition means) 53 in addition to the inter-vehicle distance G between the own vehicle 2 and the preceding vehicle W. In this case, the display control unit 50 determines the length 110a in the depth direction of the display-limited area 110 shown in FIG. 7 based on the inter-vehicle distance G acquired from the interface 53, and determines the length 110b in the left-right direction of the display-limited area 110 shown in FIG. 7 based on the end information H acquired from the interface 53. In other words, when the length of the first virtual image display surface 100 in the left-right direction is shorter than the length in the left-right direction of the preceding vehicle W, the HUD 1 in the modification can display the first virtual image V1 in the area 130a on the left of the left end of the preceding vehicle W or in the area 130b on the right of the right end of the preceding vehicle W. As a result, it is possible to ensure a wide display area on the first virtual image display surface 100 while ensuring the visibility of the preceding vehicle W and the first virtual image V1. Further, in the areas 130a, 130b on the first virtual image display surface 100 in FIG. 7, the first virtual image V1 can be displayed at a position separated farther from the viewer than the closest part Wa of the front vehicle W, and when viewing the first virtual image V1 and the preceding vehicle W, the viewer can be impressed that the first virtual image V1 is a more stereoscopic display.

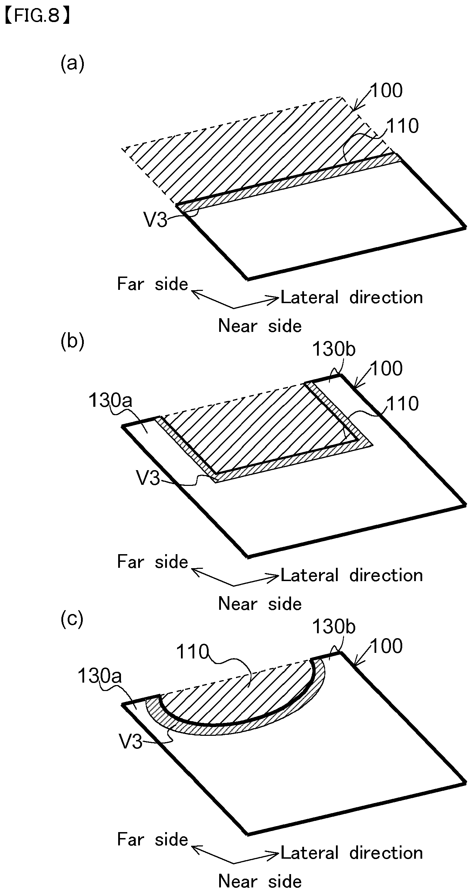

Further, the HUD 1 may display a virtual image V3 representing a boundary as shown in FIG. 8 at a boundary between the display-limited area 110 not displaying the first virtual image V1 and the other area of the first virtual image display surface 100. This enables the viewer to clearly recognize that the preceding vehicle W has entered an area of the first virtual image display surface 100. As shown in FIG. 8 (a), the virtual image V3 representing a boundary may be on a line extending in a lateral direction of the line of sight of the viewer, or as shown in FIG. 8 (b), it may be a concave shape consisting of three sides, that is, the left side, the right side, and the near side of the display-limited area 110 of the virtual image display surface 100, or as shown in FIG.8 (c), it may be a curved line to surround the left side, right side, and the near side of the display-limited area 110 of the first virtual image display surface 100.

Further, as shown in FIG. 9, the display control unit 50 may acquire operation information M based on the operation of the viewer from an operation unit 5 installed in the own vehicle 2 via the interface (operation information acquisition means) 53, and based on the operation information M, may increase or decrease the display-limited area 110 on the first virtual image display surface 100 limiting the display of the first virtual image V1. Specifically, the display control unit 50 sets an area of the first virtual image display surface 100 farther than the closest part Wa of the preceding vehicle (obstacle) W as the display-limited area 110, based on the inter-vehicle distance (distance) G between the own vehicle 2 and the preceding vehicle (obstacle) W input from the front detection unit 4. The display control unit 50 may set the size of the display-limited area 110 being set based on the information from the front detection unit 4 as a lower limit, and may increase or decrease the size of the display-limited area 110 on the first virtual image display surface 100, based on the operation information M from the operation unit 5. With such a configuration, it is possible to reduce the strange feeling that the first virtual image V1 is viewed farther than the closest part Wa of the preceding vehicle (obstacle) W, and adjust the display so that the viewer can easily recognize the first virtual image V1 and an obstacle as a real view.

Further, the display control unit 50 may change a display mode of the first image displayed on the first display surface 11 when moving the first virtual image V1 to a display position other than the display-limited area 110 of the first display surface 11. In other words, the display control unit 50 may change a display mode of the first virtual image V1 when moving a display position of the first virtual image V1. Specifically, the change in the display mode of the first virtual image Vl includes, for example, changes in shape, display color, information format such as a change from graphic to character information, and a change from a moving image to a still image, and the like.

### INDUSTRIAL APPLICABILITY

The head-up display of the present invention is suitable for a head-up display that is a display device mounted on a vehicle for displaying a virtual image.

### DESCRIPTION OF REFERENCE NUMERALS

- 1: HUD (Head-up display)
- 2: Own vehicle
- 3: Communication bus
- 4: Front detection unit
- 10: image display unit
- 11: First display surface
- 12: Second display surface
- 20: Projection unit
- 30: Image synthesizing unit
- 50: Display control unit
- 100: First virtual image display surface
- 110: Display-limited area
- 200: Second virtual image display surface
- G: Inter-vehicle distance
- H: End information
- J: Farthest display distance
- L: Lane
- M1: First display light
- M2: Second display light
- V1: First virtual image
- V2: Second virtual image
- V3: Virtual image representing a boundary

## Claims

1. A head-up display (1) configured to generate a first virtual image display surface (100) capable of displaying a first virtual image (V1) on a plane inclined in a depth direction of a line of sight, the head-up display (1) comprising
an image display unit (10) having a first display surface (11) for displaying a first image;
a projection unit (20) for projecting display light from the image display unit (10) toward the outside of the head-up display (1) such that the first image displayed on the first display surface is visually recognized as the first virtual image on the first virtual image display surface (100);
an interface (53) for acquiring a distance (G) between an own vehicle and an obstacle located in front of the own vehicle; and
a display control unit (50), which is configured to move the first virtual image (V1) displayed in a distant area (110) of the first virtual image display surface (100) that is farther than the distance (G) acquired by the interface (53) to an area of the first virtual image display surface (100) that is closer than the distant area.

2. The head-up display (1) according to claim 1, the head-up display (1) further configured to generate a second virtual image display surface (200) capable of displaying a second virtual image (V2) on a plane raised toward the viewer away from the first virtual image display surface (100), wherein the display control unit (50) is configured to make information indicated by the first virtual image (V1) displayed in the distant area (110) be displayed on the second virtual image display surface (200) instead of the first virtual image display surface (100).

3. The head-up display (1) according to claim 1, the head-up display (1) further configured to display a third virtual image (V3) at a boundary between the distant area (110) and the area of the first virtual image display surface (100) that is closer thar the distant area (110).

4. The head-up display (1) according to any one of claims 1 to 3, wherein the interface (53) is further for acquiring end information (H) related to positions of a left end and a right end of the obstacle, wherein the obstacle is a preceding vehicle, and wherein
the display control unit (50) is configured to display, based on the end information (H) acquired from the interface (53), the first virtual image in an area on the left of the left end of the preceding vehicle and/or an area on the right of the right end of the preceding vehicle in the distant area (110).

5. The head-up display (1) according to any preceding claim, wherein the first virtual image display surface (100) is inclined at an angle (θ1) of 0 - 45 degrees with respect to the horizontal direction, such that an upper end portion (100u) of the first virtual image display surface (100) is farther from a viewer than a lower end portion (100d).

## Patentansprüche

1. Head-up-Anzeige (1), die dazu eingerichtet ist, eine erste virtuelle Bildanzeigefläche (100) zu erzeugen, die in der Lage ist, ein erstes virtuelles Bild (V1) auf einer Ebene anzuzeigen, die in einer Tiefenrichtung einer Sichtlinie geneigt ist, wobei die Head-up-Anzeige (1) umfasst:
eine Bildanzeigeeinheit (10) mit einer ersten Anzeigefläche (11) zum Anzeigen eines ersten Bildes;
eine Projektionseinheit (20) zum Projizieren von Anzeigelicht aus der Bildanzeigeeinheit (10) zur Außenseite der Head-up-Anzeige (1), sodass das auf der ersten Anzeigefläche angezeigte erste Bild visuell als das erste virtuelle Bild auf der ersten virtuellen Bildanzeigefläche (100) erkannt wird;
eine Schnittstelle (53) zum Erfassen einer Entfernung (G) zwischen einem eigenen Fahrzeug und
einem vor dem eigenen Fahrzeug befindlichen Hindernis; und
eine Anzeigesteuereinheit (50), die dazu eingerichtet ist, das erste virtuelle Bild (V1), das in einem entfernten Bereich (110) der ersten virtuellen Bildanzeigefläche (100) angezeigt wird, der weiter als die durch die Schnittstelle (53) erfasste Entfernung (G) entfernt ist, zu einem Bereich der ersten virtuellen Bildanzeigefläche (100) bewegt, der näher als der entfernte Bereich ist.

2. Head-up-Anzeige (1) gemäß Anspruch 1, wobei das Head-up-Anzeige (1) ferner dazu eingerichtet ist, eine zweite virtuelle Bildanzeigefläche (200) zu erzeugen, die in der Lage ist, ein zweites virtuelles Bild (V2) auf einer Ebene anzuzeigen, die höher zum Betrachter hin weg von der ersten virtuellen Bildanzeigefläche (100) angeordnet ist, wobei
die Anzeigesteuereinheit (50) dazu eingerichtet ist, Informationen, die durch das erste virtuelle Bild (V1) angegeben werden, das in dem entfernten Bereich (110) angezeigt wird, auf der zweiten virtuellen Bildanzeigefläche (200) anstelle der ersten virtuellen Bildanzeigefläche (100) anzuzeigen.

3. Head-up-Anzeige (1) gemäß Anspruch 1, wobei das Head-up-Anzeige (1) ferner dazu eingerichtet ist, ein drittes virtuelles Bild (V3) an einer Grenze zwischen dem entfernten Bereich (110) und dem Bereich der ersten virtuellen Bildanzeigefläche (100) anzuzeigen, der näher als der entfernte Bereich (110) ist.

4. Head-up-Anzeige (1) gemäß einem der Ansprüche 1 bis 3, wobei die Schnittstelle (53) ferner zum Erfassen von Endinformationen (H) dient, die sich auf Positionen eines linken Endes und eines rechten Endes des Hindernisses beziehen, wobei das Hindernis ein vorausfahrendes Fahrzeug ist, und wobei die Anzeigesteuereinheit (50) dazu eingerichtet ist, basierend auf den durch die Schnittstelle (53) erfassten Endinformationen (H) das erste virtuelle Bild in einem Bereich links von dem linken Ende des vorausfahrenden Fahrzeugs und/oder einem Bereich rechts von dem rechten Ende des vorausfahrenden Fahrzeugs in dem entfernten Bereich (110) anzuzeigen.

5. Head-up-Anzeige (1) gemäß einem der vorhergehenden Ansprüche, wobei die erste virtuelle Bildanzeigefläche (100) in einem Winkel (θ1) von 0 - 45 Grad in Bezug auf die horizontale Richtung geneigt ist, sodass ein oberer Endabschnitt (100u) der ersten virtuellen Bildanzeigefläche (100) weiter als ein unterer Endabschnitt (100d) von einem Betrachter entfernt ist.

## Revendications

1. Affichage tête haute (1) configuré pour générer une surface d'affichage de première image virtuelle (100) capable d'afficher une première image virtuelle (V1) sur un plan incliné dans une direction de profondeur d'une ligne de visée, l'affichage tête haute (1) comprenant:
une unité d'affichage d'image (10) ayant une première surface d'affichage (11) pour afficher une première image ;
une unité de projection (20) pour projeter de la lumière d'affichage à partir de l'unité d'affichage d'image (10) vers l'extérieur de l'affichage tête haute (1) de telle sorte que la première image affichée sur la première surface d'affichage soit visuellement reconnue en tant que première image virtuelle sur la surface d'affichage de première image virtuelle (100) ;
une interface (53) pour acquérir une distance (G) entre un véhicule particulier et un obstacle situé devant le véhicule particulier ; et
une unité de commande d'affichage (50), qui est configurée pour déplacer la première image virtuelle (V1) affichée dans une zone distante (110) de la surface d'affichage de première image virtuelle (100) qui est plus éloignée que la distance (G) acquise par l'interface (53) jusqu'à une zone de la surface d'affichage de première image virtuelle (100) qui est plus près de la zone distante.

2. Affichage tête haute (1) selon la revendication 1, l'affichage tête haute (1) étant en outre configuré pour générer une surface d'affichage de deuxième image virtuelle (200) capable d'afficher une deuxième image virtuelle (V2) sur un plan relevé vers la personne qui regarde l'affichage, de façon éloignée de la surface d'affichage de première image virtuelle (100), dans lequel
l'unité de commande d'affichage (50) est configurée pour faire en sorte que des informations indiquées par la première image virtuelle (V1) affichée dans la zone distante (110) soient affichées sur la surface d'affichage de deuxième image virtuelle (200) au lieu de la surface d'affichage de première image virtuelle (100).

3. Affichage tête haute (1) selon la revendication 1, l'affichage tête haute (1) étant en outre configuré pour afficher une troisième image virtuelle (V3) à une limite entre la zone distante (110) et la zone de la surface d'affichage de première image virtuelle (100) qui est plus près de la zone distante (110).

4. Affichage tête haute (1) selon l'une quelconque des revendications 1 à 3, dans lequel l'interface (53) est en outre pour acquérir des informations d'extrémité (H) connexes à des positions d'une extrémité gauche et d'une extrémité droite de l'obstacle, dans lequel l'obstacle est un véhicule précédent, et dans lequel
l'unité de commande d'affichage (50) est configurée pour afficher, sur la base des informations d'extrémité (H) acquises à partir de l'interface (53), la première image virtuelle dans une zone sur la gauche de l'extrémité gauche du véhicule précédent et/ou une zone sur la droite de l'extrémité droite du véhicule précédent dans la zone distante (110).

5. Affichage tête haute (1) selon une quelconque revendication précédente, dans lequel la surface d'affichage de première image virtuelle (100) est inclinée à un angle (θ1) de 0 - 45 degrés par rapport à la direction horizontale, de telle sorte qu'une partie d'extrémité supérieure (100u) de la surface d'affichage de première image virtuelle (100) soit plus éloignée d'une personne qui regarde l'affichage qu'une partie d'extrémité inférieure (100d).
